# NEUE EUROPÄISCHE PATENTSCHRIFT

(11) **EP 1 693 651 B2**
(45) Veröffentlichungstag und Bekanntmachung des Hinweises auf die Entscheidung über den Einspruch: **12.01.2022**
(45) Hinweis auf die Patenterteilung: 19.11.2014
(21) Anmeldenummer: 06003016.0
(22) Anmeldetag: 15.02.2006
(51) Int. Cl.: G01F 15/00, G01F 1/075, G01F 15/18

(54) **Turbinendurchflussmesser**
Turbine mass flow meter
Débitmètre à turbine

(30) Priorität: 21.02.2005 AT 2772005
(43) Veröffentlichungstag der Anmeldung: 23.08.2006
(73) Patentinhaber: Gealan Formteile GmbH, 95145 Oberkotzau (DE); Vaillant GmbH, 42859 Remscheid (DE)
(72) Erfinder: Braun, Thomas, 95234 Sparneck (DE); Laubmann, Gerhard, 95119 Naila (DE); Saunus, Christian, 08223 Grünbach (DE); Hiegemann, Markus, 44807 Bochum (DE); Peters, Bernard, 50259 Pulheim (DE); Ruf, Andreas, 42853 Remscheid (DE); Salg, Frank, 42897 Remscheid (DE); Spahn, Hans-Josef, 40699 Erkrath (DE)
(74) Vertreter: Popp, Carsten

(56) Entgegenhaltungen:
- WO-A-99/07456
- DE-A1- 10 014 106
- FR-A3- 2 544 187
- US-B1- 6 487 919

## Beschreibung

Die Erfindung bezieht sich auf einen Wassermengenmesser.

Wassermengenmesser werden unter anderem in Heizungs- und Trinkwasseranlagen eingesetzt, um den Wasservolumenstrom zu messen. Hierbei werden unter anderem Flügelräder mit Hallsensoren verwendet. Das Flügelrad befindet sich dabei im Wasserweg; die Drehzahl des Flügelrades nimmt mit dem Wasservolumenstrom stetig zu. Mit dem Flügelrad sind zumeist über eine Welle Permanent-Magneten außerhalb des Wassermengenmessergehäuses verbunden. Ebenfalls außerhalb des Wassermengenmessergehäuses befindet sich ein Hallsensor, an dem die Magnete bei der Rotation des Flügelrades vorbeistreichen, wodurch Impulse erzeugt werden. Die Anzahl der Impulse ist ein Maß für den Wasservolumenstrom.

Bei Wassermengenmessern gemäß dem Stand der Technik ergibt sich das Problem, dass die Durchführung vom Flügelrad zu den Magneten durch das Gehäuse abgedichtet sein muss. Ferner darf der Hallsensor nicht mit Wasser in Verbindung kommen.

FR 2544187 offenbart ein Wassermengenmesser gemäß dem Oberbegriff des Anspruchs 1.

Aufgabe der vorliegenden Erfindung ist es daher, einen Wassermengenmesser zu schaffen, welcher sich durch einfachen Aufbau und Wasserdichtheit auszeichnet.

Erfindungsgemäß wird dies durch einen Wassermengenmesser gemäß den Merkmalen des Anspruchs 1 dadurch erreicht, dass mindestens ein Permanent-Magnet mit dem Flügelrad innerhalb des Wassermengenmessergehäuses verbunden ist, während der Hallsensor sich außerhalb des Gehäuses befindet. Hierdurch wird erreicht, dass keine Wellendurchführung abgedichtet werden muss. Gleichzeitig kann erreicht werden, dass keine Gefahr besteht, dass Wasser durch das Gehäuse austritt und den Hallsensor in seiner Funktion beeinträchtigt.

Durch die Merkmale des Anspruchs 1 ergibt sich der Vorteil, dass die Welle, auf welcher das Flügelrad geführt wird, nicht selbst rotationstauglich gelagert sein muss, sondern vielmehr starr mit dem Gehäuse verbunden sein kann.

Gemäß den Merkmalen des Anspruchs 1 wird die Welle mit einem Teil des Gehäuses einteilig im Spritzgussverfahren hergestellt.

Gemäß den Merkmalen des abhängigen Anspruchs 2 ist der Hallsensor auf einer Platine befestigt. Diese Platine wird in eine Aufnahme am Gehäuse eingeführt, wodurch der Hallsensor günstig befestigt werden kann.

Gemäß den Merkmalen des abhängigen Anspruchs 3 wird die Platine mittels einer Rastnase in der Aufnahme gesichert.

Gemäß den Merkmalen des abhängigen Anspruchs 4 befindet sich zwischen der Platine und dem Gehäuse zumindest größtenteils ein Spalt. Hierdurch wird erreicht, dass die Platine thermisch von dem Wasserkreislauf entkoppelt ist, wodurch - insbesondere dann, wenn kühles Wasser durch den Wassermengenmesser strömt, während außen warmfeuchte Luft das Gehäuse umgibt - Kondensation vermieden wird. Der Stecker vermeidet den Eintritt von Feuchte in den Raum, in dem sich die Platine befindet.

Die Erfindung wird nun anhand der Figuren erläutert. Hierbei zeigen
Figur 1 einen Wassermengenmesser im Schnitt,
Figur 2 denselben Wassermengenmesser als Explosionszeichnung,
Figur 3 ein Gehäuseteil mit Welle,
Figur 4 dasselbe Gehäuseteil mit Flügelrad, Magneten und Hallsensor,
Figur 5 den Hallsensor vor der Aufnahme im Gehäuse des Wassermengenmessers und
Figur 6 den gleichen Sachverhalt wie Figur 5, jedoch aus einen anderen Blickwinkel.

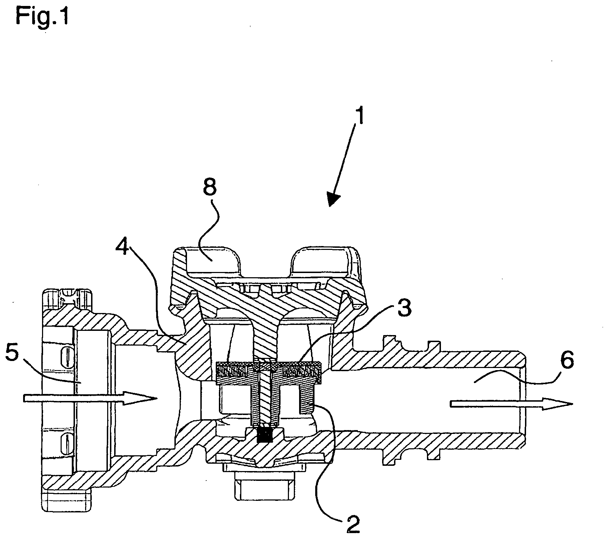

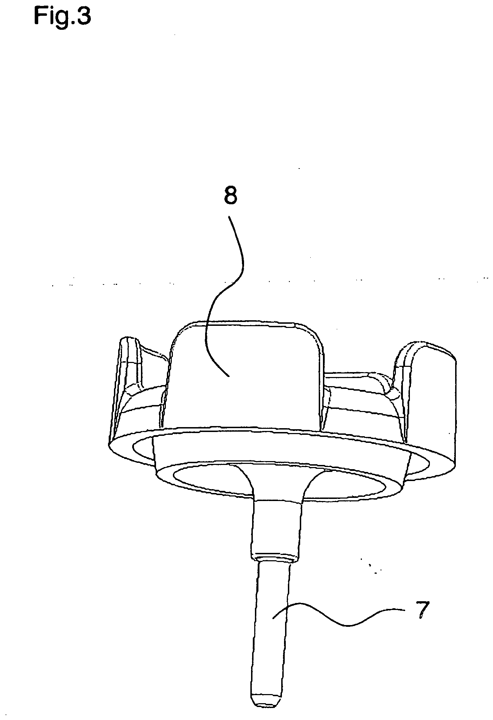

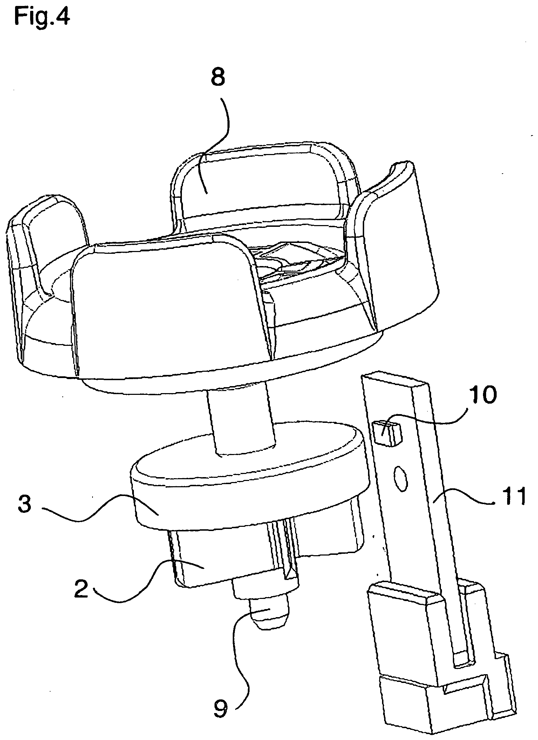

Figur 1 zeigt einen Wassermengenmesser 1 mit einem Gehäuse 4 sowie einem Gehäuseteil 8. Das Gehäuseteil 8 ist in Figur 3 detaillierter dargestellt. Man erkennt, dass mit dem Gehäuseteil 8 eine Welle 7 einteilig verbunden ist. Figur 4 zeigt dasselbe Gehäuseteil, wobei auf der Welle 7 sowohl das Flügelrad 2 als auch die unmittelbar damit verbundenen Permanent-Magneten 3 verbunden sind. Die Permanent-Magnete 3 und das Flügelrad 2, welche fest miteinander verbunden sind, werden durch eine Sicherung 9 auf der Welle 7 gehalten. Gegenüber den Permanent-Magneten 3 ist ein Hallsensor 10 auf einer Platine 11 angeordnet. Aus Figur 1 geht hervor, dass das Gehäuseteil 8 derartig im Gehäuse 4 integriert ist, dass das Flügelrad 2 im Strömungsweg zwischen dem Eintritt 5 und dem Austritt 6 angeordnet ist.

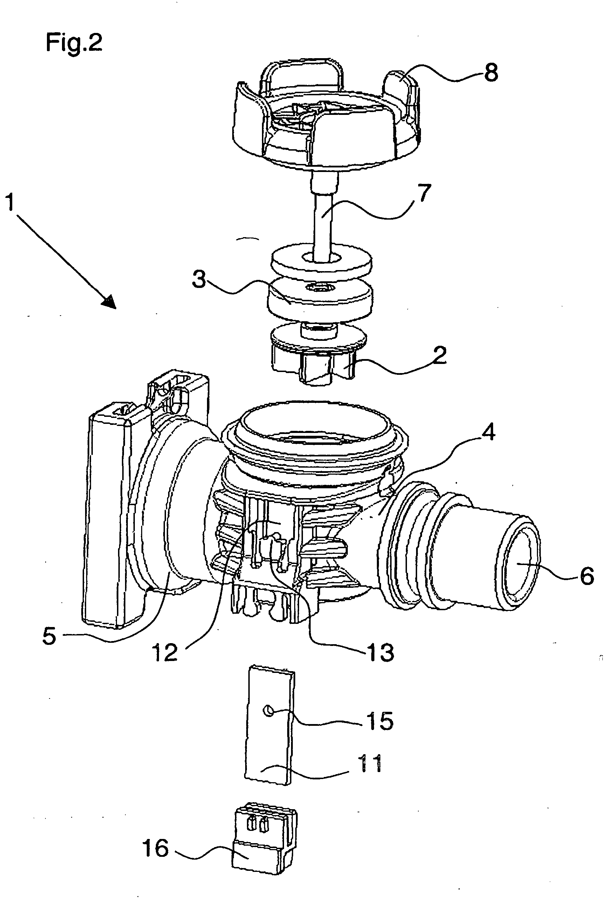

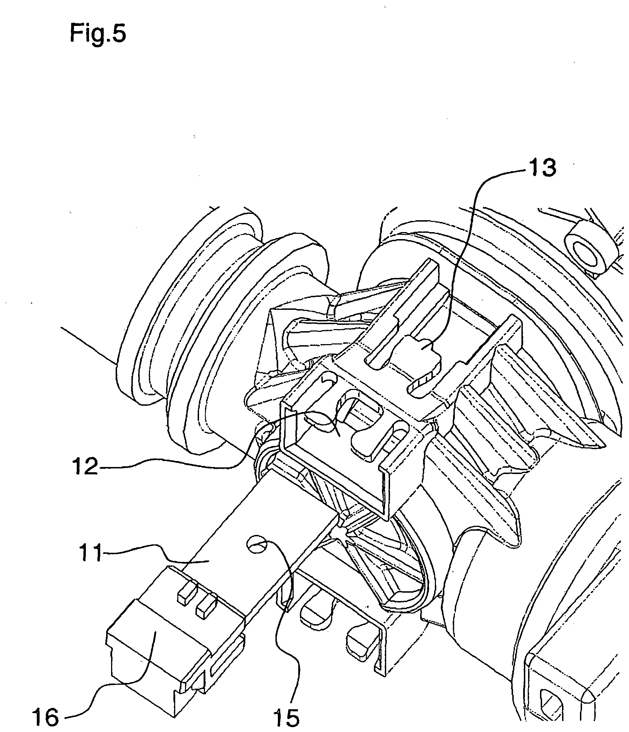

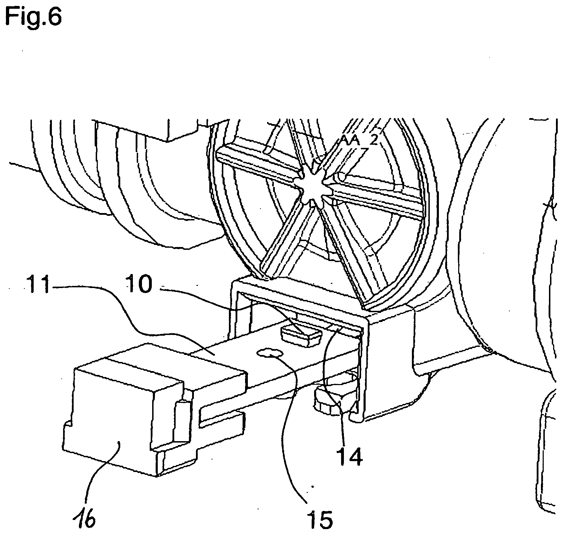

Figur 2 zeigt neben den bereits beschriebenen Elementen eine Aufnahme 12 am Gehäuse 4. In diese Aufnahme 12 kann die Platine 11 eingeschoben werden. Die Platine 11 verfügt über eine Bohrung 15, in welche eine Rastnase 13 einrasten kann. Die Platine 11 wird mit einem Stecker 16 verbunden. Die Figuren 5 und 6 zeigen das Detail der Aufnahme 12 sowie der Platine 11 aus zwei unterschiedlichen Blickwinkeln.

Wird der Wassermengenmesser 1 durchströmt, so treibt das Wasser das Flügelrad 2 an. Das Flügelrad 2 rotiert um die Welle 7. Die fest mit dem Flügelrad 2 verbundenen Permanent-Magneten 3 rotieren ebenfalls um die Welle 7. Die Nord- und Südpole der Permanent-Magnete 3 strömen an dem Hallsensor 10, welcher sich außerhalb des Gehäuses 4 befindet, vorbei und sorgen somit für digitale Zählimpulse. Je höher der Wasserdurchfluss ist, umso mehr Impulse werden von dem Hallsensor 10 erfasst.

Zur Montage des Wassermengenmessers 1 werden zunächst die Einheit aus Flügelrad 2 und Permanent-Magneten 3 auf die Welle 7 geschoben und mittels Sicherung 9 festgehalten. Das Gehäuseteil 8 wird mit dem Gehäuse 4 fest verbunden, die Platine 11 wird in die Aufnahme 12 geschoben, bis die Rastnase 13 in die Bohrung 15 einrastet. Anschließend wird der Stecker 16 aufgeschoben. Befindet sich der Wassermengenmesser 1 in einer Umgebung mit warmer feuchter Luft und wird von kaltem Wasser durchströmt, so besteht die Gefahr, dass sich Kondensat bildet. Durch den Spalt 14 zwischen der Platine 11 und dem Gehäuse 4 besteht eine thermische Dämmung, so dass die Gefahr der Kondensatbildung auf der Platine 11 minimiert ist.

## Patentansprüche

1. Wassermengenmesser (1) mit einem Flügelrad (2) mit mindestens einem mit diesem verbundenen Permanent-Magneten (3) und einem Hallsensor (10), der mit dem Gehäuse (4) des Wassermengenmessers (1) verbunden ist, wobei der mindestens eine Permanent-Magnet (3) innerhalb des Gehäuses (4) unmittelbar mit dem Flügelrad (2) verbunden ist und der Hallsensor (10) von dem mindestens einen Permanent-Magneten (3) durch eine Wand des Gehäuses (4) getrennt ist, wobei das Flügelrad (2) auf einer Welle (7), welche starr mit dem Gehäuse (4) verbunden ist, geführt wird, **dadurch gekennzeichnet, dass** die Welle (7) und ein Teil (8) des Gehäuses (4) einteilig im Spritzgussverfahren hergestellt sind.

2. Wassermengenmesser (1) nach Anspruch 1, **dadurch gekennzeichnet, dass** der Hallsensor (10) auf einer Platine (11), welche in einer Aufnahme (12) am Gehäuse (4) befestigt ist, befestigt ist.

3. Wassermengenmesser (1) nach Anspruch 2, **dadurch gekennzeichnet, dass** die Platine (11) in der Aufnahme (12) mittels einer Rastnase (13) gesichert ist.

4. Wassermengenmesser (1) nach Anspruch 2 oder 3, **dadurch gekennzeichnet, dass** sich zwischen Platine (11) und Gehäuse (4) ein Spalt (14) befindet und der so gebildete Raum von einem Stecker (16), welcher mit der Platine (11) verbunden wird, begrenzt ist.

## Claims

1. A water flow meter (1) with an impeller (2) with at least one part connected to these permanent magnets (3) and a Hall sensor (10), which is connected to the housing (4) of the water flow meter (1), whereby at least one permanent magnet (3) within the housing (4) is connected directly to the impeller (2) and the Hall sensor (10) is separated from at least one of the permanent magnets (3) by a wall of the housing (4), whereby the impeller (2) is guided by a shaft (7), which is rigidly connected to the housing (4), **characterised in that** the shaft (7) and a part (8) of the housing (4) are injection moulded in one piece.

2. A water flow meter (1) according to Claim 1, **characterised in that** the Hall sensor (10) is mounted on a plate (11), which is mounted in a slot (12) in the housing (4).

3. A water flow meter (1) according to Claim 2, **characterised in that** the plate (11) is secured in the slot (12) by means of a latch (13).

4. A water flow meter (1) according to Claim 2 or 3, **characterised in that** there is a gap (14) between the plate (11) and the housing (4) and the space formed in this way is bounded by a connector (16), which is connected to the plate (11).

## Revendications

1. Compteur d'eau (1) avec une roue à hélice (2) avec au moins un aimant permanent (3) relié à celle-ci et un capteur à effet Hall (10), qui est relié au boîtier (4) du compteur d'eau (1), dans lequel l'au moins un aimant permanent (3) est relié directement à la roue à hélice (2) à l'intérieur du boîtier (4) et le capteur à effet Hall (10) est séparé de l'au moins un aimant permanent (3) par une paroi du boîtier (4), dans lequel la roue à hélice (2) est guidée sur un arbre (7), qui est relié de manière rigide au boîtier (4), **caractérisé en ce que** l'arbre (7) et une partie (8) du boîtier (4) sont fabriqués d'une seule pièce dans le procédé de moulage par injection.

2. Compteur d'eau (1) selon la revendication 1, **caractérisé en ce que** le capteur à effet Hall (10) est fixé sur une platine (11), qui est fixée dans un logement (12) sur le boîtier (4).

3. Compteur d'eau (1) selon la revendication 2, **caractérisé en ce que** la platine (11) est bloquée dans le logement (12) au moyen d'un ergot d'encliquetage (13).

4. Compteur d'eau (1) selon la revendication 2 ou 3, **caractérisé en ce qu'**une fente (14) se trouve entre la platine (11) et le boîtier (4) et l'espace ainsi formé est délimité par un connecteur (16), qui est relié à la platine (11).
